# EUROPÄISCHE PATENTSCHRIFT

(11) **EP 1 185 439 B1**
(45) Veröffentlichungstag und Bekanntmachung des Hinweises auf die Patenterteilung: **11.02.2004**
(21) Anmeldenummer: 00947778.7
(22) Anmeldetag: 05.06.2000
(51) Int. Cl.: B60R 16/02

(54) **ENERGIEVERSORGUNGSSYSTEM FÜR EIN SICHERHEITSRELEVANTES BREMS- BEZIEHUNGSWEISE LENK- SYSTEM IN EINEM KRAFTFAHRZEUG**
ENERGY SUPPLY SYSTEM FOR A SAFETY CRITICAL BRAKE- OR STEERING-SYSTEM IN A MOTOR VEHICLE
SYSTEME D'ALIMENTATION EN ENERGIE POUR UN SYSTEME DE FREIN OU DE DIRECTION IMPLIQUE DANS LA SECURITE MONTES DANS UN VEHICULE AUTOMOBILE

(30) Priorität: 10.06.1999 DE 19926495
(43) Veröffentlichungstag der Anmeldung: 13.03.2002
(73) Patentinhaber: SIEMENS AKTIENGESELLSCHAFT, 80333 München (DE)
(72) Erfinder: DÖRICHT, Michael, 93138 Lappersdorf (DE); EIBL, Michael, 84034 Lanshut (DE)
(86) Internationale Anmeldenummer: PCT/DE2000/001820
(87) Internationale Veröffentlichungsnummer: WO 2000/076810

(56) Entgegenhaltungen:
- EP-A- 0 751 045
- DE-A- 19 703 171
- DE-C- 4 322 765
- DE-C- 19 615 186
- US-A- 4 386 309
- US-A- 5 047 298
- US-A- 5 488 283

## Beschreibung

Die Erfindung betrifft die Energieversorgung, insbesondere die elektrische Notversorgung, eines sicherheitsrelevanten, elektrisch betriebenen Brems- oder Lenksystems in einem Kraftfahrzeug.

Aufgrund vielfältiger Vorteile - vor allem was die universelle Regelbarkeit, den Umfang der möglichen Regelfunktionen, den Preis, das Gewicht und den Kraftstoffverbrauch sowie den Herstellungs- und Wartungsaufwand betrifft - setzen sich im Automobilbereich bei sicherheitsrelevanten Funktionen, wie Brems- und Lenkeingriffen, in zunehmendem Maße Systeme durch, die vollständig elektrisch betrieben und elektronisch geregelt werden. Bei derartigen Systemen ist die gesamte Energie für Regelung und Erzeugung der Stellkräfte elektrischer Natur. Ein direkter Eingriff vom Fahrer auf die Stelleinrichtungen ist nicht mehr möglich. Üben diese Stelleinrichtungen sicherheitsrelevante Aufgaben, wie Lenken und Bremsen, aus, kommt der Sicherstellung der elektrischen Energieversorgung für diese Systeme eine außerordentlich große Bedeutung zu.

Bekannte elektrische Bremsanlagen weisen an jeder Radbremse ein elektrisch betriebenes und elektronisch geregeltes Stellglied zur Erzeugung der Bremskräfte auf, das von einer zentralen Steuereinheit mit Sollwerten für die Bremskräfte versorgt wird und diese Sollwerte dann selbsttätig einregelt.
Der Verzögerungswunsch des Fahrers wird über Sensoren an einem Pedalsimulator erfaßt. Der Fahrer selbst hat keine Möglichkeit mehr, Bremskräfte über seine Muskelkraft aufzubringen (DE 196 15 186 C1). Weiterhin ist auch ein Einsatz elektrischer Lenkungen bekannt, bei denen sich an allen Rädern oder zumindest an der Vorderachse Stelleinrichtungen für den Lenkeinschlag der Räder befinden. Über Sensoren am Lenkrad wird der vom Fahrer kommende Lenkbefehl erfaßt. In einer Steuereinheit werden daraus Sollwerte für die Stelleinrichtungen ermittelt, die diese dann selbsttätig einstellen. Auch hier hat der Fahrer keine Möglichkeit mehr, direkt auf die Räder oder Lenkeinrichtungen einzuwirken.

Im Normalbetrieb werden derartige Systeme aus dem Fahrzeug-Bordnetz versorgt. Ist die Funktion des Bordnetzes aufgrund einer Fehlfunktion beeinträchtigt, so daß die Bordnetzspannung unter die Mindestbetriebsspannung des jeweiligen Systems absinkt oder sogar ganz ausfällt, so müssen die Systeme weiterhin betriebsfähig sein, um ihre sicherheitsrelevanten Aufgaben erfüllen zu können. Aus diesem Grund ist für diese Systeme eine elektrische Notversorgung vorzusehen.

Bisherige Lösungen stützen sich auf den Einbau zusätzlicher elektrischer Energiespeicher, wie Akkumulatoren. Diese Akkumulatoren werden während des Normalbetriebs aus dem Bordnetz des Fahrzeugs geladen. Ist die Funktion des Bordnetzes beeinträchtigt, veranlaßt eine Überwachungs- und Umschaltvorrichtung die Versorgung der sicherheitsrelevanten Systeme aus dem zusätzlichen Energiespeicher. Die heute verfügbaren elektrischen Energiespeicher in Form von Akkumulatoren weisen jedoch eine Reihe gewichtiger Nachteile auf.

Bei nicht belastetem Energiespeicher und fehlender Speisung aus dem Bordnetz entladen sich die Akkumulatoren nach einer gewissen Zeit selbständig. Obwohl die sicherheitsrelevanten Systeme bei abgestelltem Fahrzeug nicht in Betrieb sind und somit die Zusatzspeicher nicht belasten, nimmt die im Zusatzspeicher gespeicherte Energiemenge mit zunehmender Dauer kontinuierlich ab. Wird das Fahrzeug für längere Zeit abgestellt, so daß die Zusatzspeicher weitgehend entladen sind, muß bei einem anschließenden Start des Fahrzeugs erst eine ausreichende Ladung der Zusatzspeicher abgewartet werden, bevor das Fahrzeug den sicheren Parkzustand verlassen und sich in den Verkehr begeben kann. Würde das Fahrzeug andernfalls sofort vollständig in Betrieb genommen, bestünde das Risiko, für die Zeit des Nachladens mit nicht oder nur teilweise funktionstüchtigen Energiespeichern für die sicherheitsrelevanten Systeme zu fahren und im Falle eines Absinkens der Bordnetzspannung unter die Mindestbetriebsspannung des sicherheitsrelevanten Systems oder eines Bordnetzausfalls während dieser Zeitspanne keine oder nur unzureichende Betriebsenergie für diese Systeme bereitstellen zu können. Damit würde ein Ausfall dieser Systeme in Kauf genommen. Zum Ausgleich der Selbstentladung ist ein ständiges Nachladen der Speicher aus dem Bordnetz während des Fahrzeugbetriebs erforderlich, was eine entsprechende Vorrichtung zur Laderegelung erfordert. Außerdem muß die Ladung dem Zustand des Akkumulators angepaßt werden, da sowohl ein Unterladen wie auch ein Überladen sich schädlich auf die Lebensdauer und die Speicherkapazität des Akkumulators auswirkt. Dies bedingt eine entsprechend aufwendige Sensorik und Meßtechnik zum Erfassen des Ladezustands. Dennoch kann der Ladezustand selbst mit verhältnismäßig hohem Aufwand nur ziemlich ungenau ermittelt werden.

Herkömmliche Energiespeicher, insbesondere die heute standardmäßig im Fahrzeugbereich verwendeten Blei-Säure- oder Blei-Gel-Systeme, weisen ein erhebliches Gewicht auf, was sich nachteilig auf den Kraftstoffverbrauch des Fahrzeugs auswirkt.

Chemische Prozesse in den Akkumulatoren begründen einen Alterungsprozeß, d. h. auch bei Nichtbelastung des Speichers verringert sich seine Speicherkapazität kontinuierlich mit fortschreitender Gebrauchsdauer.

Die genannten Nachteile schränken den Gebrauchsnutzen derartiger Speicher für sicherheitsrelevante Systeme erheblich ein und führen aus dem Bestreben einer Minimierung von Sicherheitsrisiken heraus zu einer mehrfachen Überdimensionierung der Speicherkapazität mit entsprechend nachteiligem Auswirken auf Gewicht und Kosten.

Ein Energieversorgungssystem für elektrisch betriebene Systeme in kraftfahrzen mit Notenergieversorgung durch ein Brennstoffzellensystem ist aus der US 5 488 283 bekannt (nächstkommender Stand der Technik).

Der Erfindung liegt das technische Problem zugrunde, elektrische Energieversorgungssysteme für ein elektrisch betriebenes Bremssystem und ein elektrisch betriebenes Lenksystem in einem Kraftfahrzeug zu schaffen, die mit geringem regelungstechnischem Aufwand bei einer Beeinträchtigung der Funktion des Bordnetzes jederzeit eine zuverlässige elektrische Notversorgung des sicherheitsrelevanten Systems gewährleisten.

Dieses Problem wird durch ein Energieversorgungssystem mit den Merkmalen des Anspruchs 1 beziehungsweise 2 gelöst. Vorteilhafte Weiterbildungen der Erfindung sind in den Unteransprüchen niedergelegt.

In der Technik sind Brennstoffzellen seit langem bekannt. Ihr Prinzip beruht darauf, einer elektrochemischen Zelle, bestehend aus zwei porösen Elektroden und einem ionenleitfähigen Elektrolyten, der die beiden Elektroden elektrisch miteinander verbindet, an der ersten Elektrode (Anode) Brennstoff in Form von Wasserstoff oder wasserstoffhaltigem Trägerstoff - beispielsweise Methan oder Methanol - und an der zweiten Elektrode (Kathode) Oxidationsmittel in Form von Sauerstoff - bei einigen Brennstoffzellenarten genügt Luftsauerstoff - oder sauerstoffhaltigem Trägerstoff zuzuführen. In der Brennstoffzelle findet unter der katalytischen Wirkung der Elektroden eine Redoxreaktion statt, bei der aus Wasserstoff und Sauerstoff Wasser erzeugt wird. Durch die räumliche Trennung der Reaktionspartner mittels des Elektrolyten unterbleibt die übliche Knallgasreaktion und die bei der Reaktion frei werdende Energie fällt als elektrische Energie und Wärmeenergie an. Dabei erreichen Brennstoffzellen sehr hohe Wirkungsgrade für die Umsetzung der chemischen Energie in elektrische Energie - übliche Wirkungsgrade liegen bei ca. 60%. Somit wird durch den Einsatz der Brennstoffzelle ein Gewichtsvorteil erzielt, da die nutzbaren Energiedichten bei Brennstoffzellen etwa zehnmal höher liegen als bei Blei-Säure- oder Blei-Gel-Systemen.

Brennstoff und Oxidationsmittel werden in getrennten Speicherbehältern - im folgenden auch als Brennstoffbehälter bzw. Oxidationsmittelbehälter bezeichnet - bereitgestellt. Der Energieinhalt des Brennstoffzellensystems hängt unmittelbar von den verfügbaren Brennstoff- und Oxidationsmittel-Mengen ab. Der Speicherinhalt der Speicherbehälter ist somit ein direktes Maß für den entnehmbaren elektrischen Energieinhalt des Systems. Die Bestimmung des "Ladezustands" reduziert sich damit auf die Bestimmung der Speicherinhalte der Speicherbehälter. Bei flüssigen Brennstoffen genügt dazu eine einfache Füllstandsermittlung, bei gasförmigen Brennstoffen kann aus Druck und Temperatur des Speicherbehälters zuverlässig auf den Speicherinhalt geschlossen werden.

Da die Brennstoffzelle nur dann chemische Energie in elektrische Energie umwandelt, wenn ihr Brennstoff und Oxidationsmittel zugeführt wird, läßt sich eine Selbstentladung auf einfache Weise dadurch vollständig unterbinden, daß bei Nichtbenutzung der Zelle die Zufuhr von Brennstoff und Oxidationsmittel zu den Elektroden über geeignete Ventile unterbrochen wird. Somit bleibt der nutzbare Energieinhalt auch bei sehr langen Stillstandszeiten unverändert erhalten. Wird Luftsauerstoff als Oxidationsmittel eingesetzt, ist eine Unterbrechung der Brennstoffzufuhr ausreichend.

Ein Nachladen der Brennstoffzelle erfolgt nicht, sollte sie nach Inanspruchnahme entladen sein, werden die Speicherbehälter einfach durch neue ersetzt oder wieder aufgefüllt. Somit entfällt eine aufwendige Ladevorrichtung.

Ein Ausfall des Brennstoffzellensystems soll sofort bemerkt werden und nicht erst bei einer Beeinträchtigung der Bordnetzversorgung. Dazu ist eine Überwachungsvorrichtung vorgesehen, die fortlaufend neben dem Füllstand der Speicherbehälter auch die Funktionstüchtigkeit der Brennstoffzelle selbst überprüft, und zwar ohne dafür Brennstoff zu verbrauchen.

Ausführungsbeispiele der Erfindung werden im folgenden anhand der Figuren erläutert. Es zeigen:
- Figur 1: eine schematische Darstellung eines elektrisch betriebenen Bremssystems
- Figur 2: eine schematische Darstellung eines elektrisch betriebenen Lenksystems und
- Figur 3: eine schematische Darstellung einer piezoelektrisch betriebenen Ventileinheit.

Ein elektrisches Bremssystem 1 weist vier an den Rädern des Fahrzeugs angebrachte Radbremseinrichtungen 2 auf. Jede Radbremseinrichtung 2 besteht aus einem Radbremsaktor 3 und einer zugehörigen elektronischen Regeleinrichtung 4. Die Aktoren 3 werden elektrisch betrieben und über die elektronischen Regeleinrichtungen 4 gesteuert. Ein Pedalsimulator 5 setzt Bewegungen eines Bremspedals 6, d. h. die von dem Fahrer ausgeübte Kraft und/oder den Pedalweg in elektrische Signale um, die einer Steuereinheit 7 zugeführt werden. In der Steuereinheit 7 werden auf Basis dieser Signale Sollwerte für die Bremsen, insbesondere für die Fahrzeugverzögerung und die aufzubringenden Bremsmomente berechnet. Die von der Steuereinheit 7 berechneten Sollwerte werden über ein Kommunikationssystem 8, z.B. über bidirektionale Datenleitungen oder ein Bus-System, an die Regeleinrichtungen 4 der Radbremseinrichtungen 2 übertragen. Umgekehrt senden die Regeleinrichtungen 4 über dieses Kommunikationssystem 8 Rückmeldedaten, wie beispielsweise die Istwerte der Bremsmomente an die Steuereinheit 7. Die Betriebsenergie für die elektrischen Energieverbraucher im System wird bei störungsfreiem Betrieb des Bremssystems 1 aus einem Bordnetz 9 des Fahrzeugs entnommen. Eine Verteilungs- und Sicherheitsschaltung (VSS) 10 übernimmt dabei die Zuteilung der Energieströme zu den einzelnen Radbremseinrichtungen 2 sowie eine Kurzschlußabsicherung und eine Trennung des Bremssystems 1 in zwei Bremskreise. Die Verteilungs- und Sicherheitsschaltung (VSS) 10 wird von der Steuereinheit 7 gesteuert.

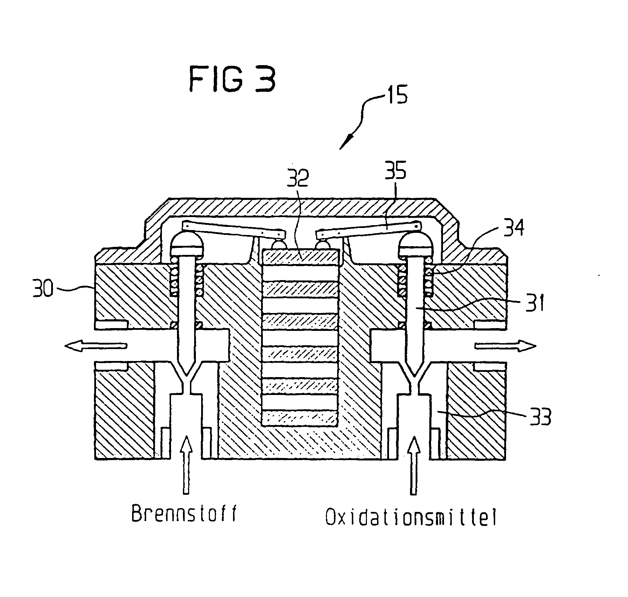

Als Notenergieversorgung ist ein Brennstoffzellensystem 11 vorgesehen. Es besteht aus der eigentlichen Brennstoffzelle 12, Behältern 13 und 14 für Brennstoff bzw. Oxidationsmittel und einer Ventileinheit 15, die in die Verbindungsleitungen zwischen den Behältern 13 und 14 und den Elektroden 16, 17 der Brennstoffzelle 12 geschaltet ist und Ventile 18, 19 aufweist, durch die die Brennstoff- bzw. Oxidationsmittelzufuhr zur Brennstoffzelle 12 gesteuert wird. Die Brennstoffzelle 12 besteht dabei aus zwei porösen Elektroden - Kathode 16 und Anode 17 - und einem ionenleitfähigen Elektrolyten 20, der die beiden Elektroden 16, 17 elektrisch leitend miteinander verbindet. Die Ventileinheit 15 wird elektrisch angesteuert und ist so beschaffen, daß die Ventile 18, 19 bei Beaufschlagung mit einer elektrischen Spannung, die unterhalb einer vorgegebenen zulässigen Mindestbetriebsspannung des sicherheitsrelevanten Systems liegt, offen sind. Bei Beaufschlagung mit einer elektrischen Spannung, die größer oder gleich der zulässigen Mindestbetriebsspannung des sicherheitsrelevanten Systems ist, sind die Ventile 18, 19 dagegen geschlossen. Die Ventileinheit 15 wird direkt aus dem Bordnetz 9 des Bremssystems 1 gespeist. Die Ventileinheit 15 wird später unter Zuhilfenahme von Fig. 3 noch detailliert beschrieben.

Die Kathode 16 der Brennstoffzelle ist mit der Masseleitung des Bremssystems 1 verbunden, die Anode 17 ist über einen Bordnetzanschluß 21 mit dem Bordnetz 9 verbunden. Zwischen Bordnetz 9 und Bordnetzanschluß 21 ist ein Rückspeiseschutz 22 - im einfachsten Fall eine Diode - vorgesehen, der verhindert, daß aus dem Brennstoffzellensystem 11 Energie in ein schadhaftes Bordnetz 9 zurückgespeist wird.

Weiterhin nimmt eine Überwachungsschaltung 23, die von der Steuereinheit 7 gesteuert wird, während des Betriebs des sicherheitsrelevanten Systems eine fortlaufende Überwachung der Brennstoffzelle 12 und des Inhalts der Behälter 13, 14 vor. Die Überwachung der Brennstoffzelle 12 selbst erfolgt durch eine Leitfähigkeitsmessung des Elektrolyten 20. Bei intakten Zuleitungen, ordnungsgemäßen Elektroden 16, 17 und funktionstüchtigem Elektrolyten 20 muß der Gesamtleitwert in einem vorgegebenen Wertebereich liegen. Wird dieser Bereich verlassen, so ist auf einen Fehler in der Brennstoffzelle 12 oder in den Zuleitungen zu schließen, eine Fehlermeldung wird ausgelöst und die Steuereinheit 7 bringt den Fehler dem Fahrer, z. B. über das Aktivieren einer Warnlampe, zur Anzeige.

Die Überwachung des Inhalts von Brennstoff- und Oxidationsmittelbehälter 13 bzw. 14 erfolgt bei flüssigen Stoffen unmittelbar durch eine Füllstandsmessung, bei gasförmigen Stoffen indirekt über eine Druck- und Temperaturmessung. Wird ein bestimmter Speicherinhalt unterschritten, wird eine Warnmeldung ausgelöst, die dem Fahrer durch die Steuereinheit 7 zur Anzeige gebracht wird. Dabei wird die Brennstoffzelle 12 im Falle eines intakten Bordnetzes 9 völlig ohne Verbrauch an Brennstoff überwacht. Die notwendige elektrische Energie für den Betrieb der Leitfähigkeitsmessung und der Füllstandsoder Druck- und Temperatur-Sensoren in den Behältern 13, 14 wird unmittelbar aus dem Bordnetz 9 entnommen. Befindet sich das Fahrzeug in einem sicheren Zustand, z. B. abgestelltes Fahrzeug, wird das sicherheitsrelevante System außer Betrieb gesetzt und es findet keine Überwachung der Brennstoffzelle 12 und der Inhalte der Speicherbehälter 13, 14 statt.

Ist die Funktion des Bordnetzes 9 aufgrund einer Fehlfunktion beeinträchtigt, fällt die Betriebsspannung für die Ventileinheit 15 unter die zulässige Mindestbetriebsspannung des sicherheitsrelevanten Systems. Die Ventile 18, 19 kehren daraufhin in ihre Ruhestellung zurück und die Zuleitungen von den Behältern 13, 14 zu den Elektroden 16, 17 der Brennstoffzelle 12 werden freigegeben. Dadurch gelangen Brennstoff und Oxidationsmittel an die zugehörigen Elektroden 17 bzw. 16, eine chemische Redoxreaktion, bei der aus Wasserstoff und Sauerstoff Wasser erzeugt wird, setzt ein und gibt elektrische Energie für den Betrieb des Bremssystems 1 frei. Wegen des Rückspeiseschutzes 22, der einen Energieeintrag in das schadhafte Bordnetz 9 verhindert, bleibt die Ventileinheit 15 stromlos und somit die Ventile 18, 19 weiter geöffnet. Zur Überbrückung des Umschaltprozesses sind in der Verteiler- und Sicherheitsschaltung 10 nicht dargestellte kapazitive Kurzzeitspeicher (Kondensatoren) vorgesehen.

Wird eine Brennstoffzelle eingesetzt, die mit Luftsauerstoff als Oxidationsmittel betrieben wird, ist aufgrund der nahezu unbegrenzten Verfügbarkeit des Oxidationsmittels weder ein Oxidationsmittelbehälter 14 noch ein eigenes Ventil 19 für das Oxidationsmittel erforderlich. Die Ventileinheit 15 weist dann lediglich das Brennstoffventil 18 auf und die verfügbare Energiemenge ist unmittelbar vom Füllstand des Brennstoffbehälters 13 abhängig.

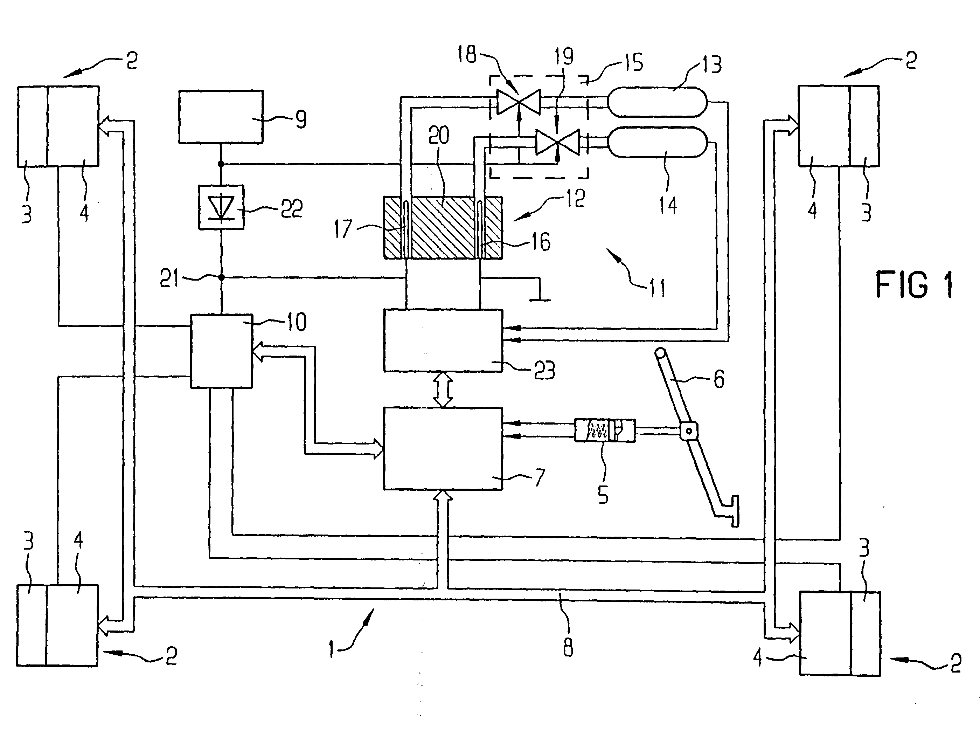

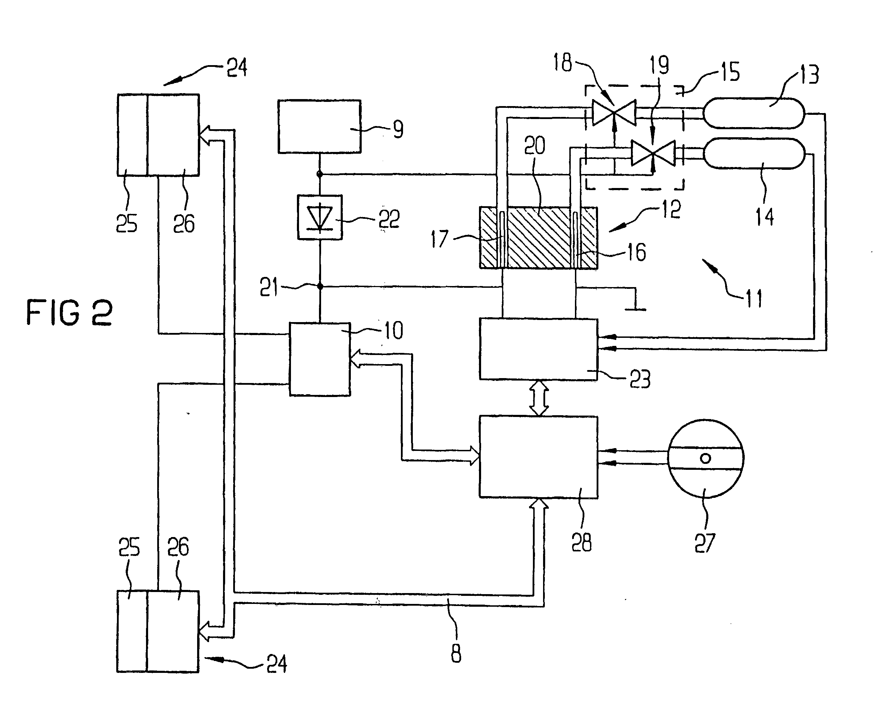

Fig. 2 zeigt ein elektrisches Lenksystem 1' als weiteres Beispiel für ein sicherheitsrelevantes System in einem Kraftfahrzeug. Dabei sind einzelne Komponenten, so weit sie funktionell mit den Teilen der Figur 1 übereinstimmen, durch dieselben Bezugszeichen gekennzeichnet. Dargestellt ist ein Lenksystem mit gelenkten Vorderrädern. Für jedes gelenkte Rad gibt es eine elektrisch betriebene und elektronisch geregelte Lenkeinrichtung 24. Jede Lenkeinrichtung 24 besteht aus einem Lenkaktor 25, durch den die Lenkkräfte erzeugt werden, und einer elektronischen Regeleinrichtung 26. Mit Hilfe von Sensoren, beispielsweise für Lenkwinkel und Lenkmoment, am Lenkrad 27 des Fahrzeugs wird der Fahrerwunsch erfaßt. Auf Basis der Sensorsignale werden dann von einer Steuereinheit 28 Sollwerte für die Lenkkräfte erzeugt. Der Rest des Systems, insbesondere das Brennstoffzellensystem 11 entspricht dem System nach Fig. 1.

Versorgungsleitungen sind in den Figuren 1 und 2 dick, Signalleitungen dünn und Kommunikationskanäle als dünne Doppellinien eingezeichnet.

Zur Steuerung der Brennstoff- und Oxidationsmittelzufuhr dient die Ventileinheit 15 mit Ventilen 18 und 19, welche bei Beaufschlagung mit einer Spannung, die unterhalb der zulässigen Mindestbetriebsspannung des sicherheitsrelevanten Systems liegt, also insbesondere im stromlosen Zustand, geöffnet sind und bei Erregung mit einer höheren elektrischen Spannung schließen. Vorteilhaft sind piezoelektrisch betriebene Ventile nach dem in Fig. 3 dargestellten Prinzip, das eine Ventileinheit 15 im spannungslosen Zustand zeigt. Ein Ventilblock 30 nimmt Ventilstifte 31 und ein Piezoelement 32 auf. Das Piezoelement 32 ist dabei vorzugsweise in Stapelbauweise aufgebaut, damit es mit den im Fahrzeug üblichen Niederspannungen betrieben werden kann. Es besteht aus mehreren geometrisch seriell angeordneten, aber elektrisch parallel geschalteten Piezoeinzelelementen. Durch diese Anordnung bleibt die Betriebsspannung gering und die geometrischen Ausdehnungen der Einzelelemente bei Anlegen der Betriebsspannung addieren sich zu der Gesamtausdehnung des Stapel-Piezoelements 32. Die genaue Funktionsweise von Piezoelementen in Stapelbauweise sind an sich bekannt und deshalb hier nicht näher beschrieben . In den Ventilblock 30 sind weiterhin Ventilsitzelemente 33 eingebracht, die die Ventilöffnung und die Dichtflächen für die Ventilstifte 31 enthalten. Die Ventilstifte 31 werden durch Federn 34 von den Sitzen abgehoben. wodurch im spannungslosen Zustand Ein- und Auslaßkanäle für den Brennstoff und das Oxidationsmittel geöffnet sind. Bei Anlegen einer Spannung an das Piezoelement 32 dehnt sich dieses aus. Über einen Hebelmechanismus 35, welcher die kleinen Auslenkungen des Piezoelements 32 vervielfacht, werden die Ventilstifte 31 dann entgegen der Federkraft nach unten gedrückt und schließen die Strömungskanäle. Das Piezoelement 32 und die Federn 34 sind dabei vorzugsweise so ausgelegt, daß die Ein- und Auslaßkanäle für den Brennstoff und das Oxidationsmittel nur dann vollständig geschlossen sind, wenn am Piezoelement eine Spannung anliegt, die größer oder gleich der zulässigen Mindestbetriebsspannung des sicherheitsrelevanten Systems ist.

Alternativ zu der beschriebenen Ausführungsform der Ventileinheit 15 ist es auch möglich, jedes der Ventile 18 und 19 für die Brennstoff- bzw. Oxidationsmittelzufuhr über ein eigenes Piezoelement 32 zu steuern. Wird Luftsauerstoff als Oxidationsmittel eingesetzt, so weist die Ventileinheit 15 lediglich das Brennstoffventil 18 auf. Die Funktionsweise bleibt aber grundsätzlich unverändert.

Für den Einsatz in der Notversorgung für sicherheitsrelevante Systeme mit Brennstoffzellen bieten derartige Ventile erhebliche Vorteile. Da die Piezoelemente der Ventile direkt an die Bordnetzversorgung des sicherheitsrelevanten Systems angeschlossen sind, sind die Ventile im Normalbetrieb, also bei funktionierendem Bordnetz stets im geschlossenen Zustand, d. h. der Brennstoffzelle wird kein Brennstoff - und gegebenenfalls Oxidationsmittel - zugeführt. Die Brennstoffzelle ist somit nicht in Betrieb und es wird keine gespeicherte Energie entnommen. Ist die Bordneizversorgung beeinträchtigt, so daß die Bordnetzspannung unter die zulässige Mindestbetriebsspannung des sicherheitsrelevanten Systems fällt, so öffnen die Ventile automatisch, die Brennstoffzelle geht in Betrieb und gibt elektrische Energie für das sicherheitsrelevante System frei. Auf diese Weise werden die elektrischen Energieverbraucher im System zumindest teilweise aus dem Brennstoffzellensystem versorgt.

Wird das Bordnetz bewußt außer Betrieb gesetzt, z. B. durch Abklemmen der Fahrzeugbatterie zu Wartungszwecken, kann eine Inbetriebnahme des Brennstoffzellensystems und damit ein Verbrauch an Brennstoff und gegebenenfalls Oxidationsmittel dadurch verhindert werden, daß die Speicherbehälter, vorteilhaft über ohnehin vorhandene Anschlußventile an derartigen Behältern, verschlossen werden. Hierzu ist keine Abtrennung der Behälter von den Zuleitungen zur Brennstoffzelle notwendig.

Bei abgestelltem Fahrzeug wird die Betriebsenergie für die Ventile dem Bordnetz entnommen. Piezoelemente verbrauchen im stationären Zustand aber so gut wie keine elektrische Energie - sie entsprechen einem aufgeladenen Kondensator. Allenfalls dielektrische Verluste und Ableitverluste durch die geringe Leitfähigkeit des Piezomaterials fallen an. Sie liegen jedoch um viele Zehnerpotenzen unter der Selbstentladung einer Fahrzeugbatterie, beeinflussen also die Entladung der Fahrzeugbatterie de facto nicht.

## Patentansprüche

1. Energieversorgungssystem für ein elektrisch betriebenes sicherheitsrelevantes Bremssystem (1) in einem Kraftfahrzeug, bei dem elektrische Energieverbraucher (2, 24) des Bremssystems (1) im Normalbetrieb über ein Bordnetz (9) und bei Beeinträchtigung der Funktion des Bordnetzes (9) zumindest teilweise über eine Notenergieversorgung, die als Brennstoffzellensystem (11) ausgebildet ist, mit Energie versorgt werden, **dadurch gekennzeichnet, daß** das Brennstoffzellensystem (11) eine Brennstoffzelle (12) aufweist, die bei funktionierendem Bordnetz außer Betrieb ist und automatisch in Betrieb geht, wenn die Bordnetzversorgung beeinträchtigt ist.

2. Energieversorgungssystem für ein elektrisch betriebenes sicherheitsrelevantes Lenksystem (1) in einem Kraftfahrzeug, bei dem elektrische Energieverbraucher (2, 24) des Lenksystems (1) im Normalbetrieb über ein Bordnetz (9) und bei Beeinträchtigung der Funktion des Bordnetzes (9) zumindest teilweise über eine Notenergieversorgung, die als Brennstoffzellensystem (11) ausgebildet ist, mit Energie versorgt werden, **dadurch gekennzeichnet, daß** das Brennstoffzellensystem (11) eine Brennstoffzelle (12) aufweist, die bei funktionierendem Bordnetz außer Betrieb ist und automatisch in Betrieb geht, wenn die Bordnetzversorgung beeinträchtigt ist.

3. Energieversorgungssytem nach Anspruch 1 oder 2, **dadurch gekennzeichnet, daß** das Brennstoffzellensystem (11) aufweist
- einen Brennstoffbehälter (13) zum Speichern von Brennstoff
- einen Oxidationsmittelbehälter (14) zum Speichern von Oxidationsmittel,
- eine Brennstoffzelle (12) zum Erzeugen von Energie aufgrund einer chemischen Reaktion zwischen dem Brennstoff und dem Oxidationsmittel und
- eine steuerbare Ventileinheit (15) mit einem Brennstoffventil (18) zum Steuern der Brennstoffzufuhr und einem Oxidationsmittelventil (19) zum Steuern der Oxidationsmittelzufuhr zur Brennstoffzelle (12).

4. Energieversorgungssystem nach Anspruch 1 oder 2, dadurch gekenn zeichnet, daß das Brennstoffzellensystem (11) aufweist
- einen Brennstoffbehälter (13) zum Speichern von Brennstoff
- eine Brennstoffzelle (12) zum Erzeugen von Energie aufgrund einer chemischen Reaktion zwischen dem Brennstoff und einem Oxidationsmittel, wobei als Oxidationsmittel Luftsauerstoff dient, und
- eine steuerbare Ventileinheit (15) mit einem Brennstoffventil (18) zum Steuern der Brennstoffzufuhr zur Brennstoffzelle (12).

5. Energieversorgungssystem nach Anspruch 3 oder 4, **dadurch gekennzeichnet, daß** die Brennstoffzelle (12) aufweist
- eine Kathode (16), die mit der Masseleitung des sicherheitsrelevanten Systems (1, 1') verbunden ist,
- eine Anode (17), die über einen Bordnetzanschluß (21) an das Bordnetz (9) angeschlossen ist, und
- einen Elektrolyten (20), der Kathode (16) und Anode (17) elektrisch leitend miteinander verbindet.

6. Energieversorgungssystem nach Anspruch 5, **dadurch gekennzeichnet, daß** zwischen das Bordnetz (9) und den Bordnetzanschluß (21) ein Rückspeiseschutz (22) geschaltet ist.

7. Energieversorgungssystem nach einem der Ansprüche 3 bis 6, **dadurch gekennzeichnet, daß** die Ventile (18, 19) der Ventileinheit (15) im stromlosen Zustand geöffnet sind.

8. Energieversorgungssystem nach einem der Ansprüche 3 bis 7, **dadurch gekennzeichnet, daß** die Ventileinheit (15) piezoelektrisch betrieben wird.

9. Energieversorgungssystem nach einem der Ansprüche 3 bis 8, **dadurch gekennzeichnet, daß** es eine Überwachungsschaltung (23) aufweist, durch die die Brennstoffzelle (12) und/oder die Speicherbehälter (13, 14) während des Betriebs des sicherheitsrelevanten Systems fortlaufend überwacht werden.

10. Energieversorgungssystem nach Anspruch 9, **dadurch gekennzeichnet, daß** durch die Überwachungsschaltung (23)
- die Leitfähigkeit des Elektrolyten (20) der Brennstoffzelle (12) gemessen wird,
- der Leitwert mit einem vorgegebenen Wertebereich verglichen wird und
- bei Leitwerten außerhalb des Wertebereichs auf einen Fehler in der Brennstoffzelle (12) geschlossen wird und eine Fehlermeldung ausgelöst wird.

11. Energieversorgungssystem nach Anspruch 9, **dadurch gekennzeichnet, daß** durch die Überwachungsschaltung (23)
- der Speicherinhalt der Speicherbehälter (13, 14) abhängig von
• einer Füllstandsmessung bei flüssigen Brennstoffen oder Oxidationsmitteln oder
• einer Druck- und Temperaturmessung bei gasförmigen Brennstoffen oder Oxidationsmitteln
bestimmt wird,
- der Speicherinhalt mit einem vorgegebenen Grenzwert verglichen wird und
- bei Unterschreiten des Grenzwertes eine Warnmeldung ausgelöst wird.

## Claims

1. Energy supply system for an electrically operated safety-related braking system (1) in a motor vehicle, wherein electrical loads (2, 24) of the braking system (1) are supplied with energy via a vehicle electrical system (9) in normal operation and, if the vehicle electrical system (9) stops functioning, at least partly supplied by an emergency energy supply designed as a fuel cell system (11), **characterised in that** the fuel cell system (11) has a fuel cell (12) which is not in operation when the vehicle electrical system is working and automatically goes into operation if the supply from the vehicle electrical system is disrupted.

2. Energy supply system for an electrically operated safety-related steering system (1) in a motor vehicle, wherein electrical loads (2, 24) of the steering system (1) are supplied with energy via a vehicle electrical system (9) in normal operation and, if the vehicle electrical system stops functioning (9), at least partly supplied by an emergency energy supply designed as a fuel cell system (11), **characterised in that** the fuel cell system (11) has a fuel cell (12) which is not in operation when the vehicle electrical system is working and automatically goes into operation if the supply from the vehicle electrical system is disrupted.

3. Energy supply system according to Claim 1 or 2, **characterised in that** the fuel cell system (11) has
- a fuel tank (13) for storing fuel
- an oxidising agent tank (14) for storing oxidising agent
- a fuel cell (12) for the production of energy as a result of a chemical reaction between the fuel and the oxidising agent and
- a controllable valve unit (15) with a fuel valve (18) for controlling the fuel supply and an oxidising agent valve (19) for controlling the oxidising agent supply to the fuel cell (12).

4. Energy supply system according to Claim 1 or 2, **characterised in that** the fuel cell system (11) has
- a fuel tank (13) for storing fuel
- a fuel cell (12) for the production of energy as a result of a chemical reaction between the fuel and an oxidising agent, whereby oxygen in air serves as the oxidising agent, and
- a controllable valve unit (15) with a fuel valve (18) for controlling the fuel supply to the fuel cell (12).

5. Energy supply system according to Claim 3 or 4, **characterised in that** the fuel cell (12) has
- a cathode (16), which is connected to the earth wire (1, 1') of the safety-related system,
- an anode (17), which is connected to the vehicle electrical system (9) via a vehicle electrical system terminal (21) and
- an electrolyte (20), which connects anode (16) and cathode (17) conductively with each other.

6. Energy supply system according to Claim 5, **characterised in that** an energy recovery protection device (22) is connected between the vehicle electrical system (9) and the vehicle electrical system terminal (21).

7. Energy supply system according to one of Claims 3 to 6, **characterised in that** the valves (18, 19) of the valve unit (15) are open when there is no current.

8. Energy supply system according to one of Claims 3 to 7, **characterised in that** the valve unit (15) is operated piezoelectrically.

9. Energy supply system according to one of Claims 3 to 8, **characterised in that** it has a monitoring circuit (23), which continuously monitors the fuel cell (12) and/or the storage tanks (13, 14) whilst the safety-related system is in operation.

10. Energy supply system according to Claim 9, **characterised in that** the monitoring circuit (23) ensures that
- the conductivity of the electrolyte (20) in the fuel cell (12) is measured,
- the conductance is compared with a given range of values and
- if the conductance values are outside of the range of values, it is concluded that there is a fault in the fuel cell (12) and an error message is triggered.

11. Energy supply system according to Claim 9, **characterised in that** the monitoring circuit (23) ensures that
- the storage content of the storage tanks (13, 14) is determined based on
• a level measurement for fluid fuels or oxidising agents or
• a pressure and temperature measurement for gaseous fuels or oxidising agents,
- the storage content is compared with a given limit value and
- if it falls below the limit value, a warning message is triggered.

## Revendications

1. Système d'alimentation en énergie pour un système de freinage (1) important pour la sécurité, à fonctionnement électrique, dans un véhicule automobile, dans lequel des consommateurs d'énergie électrique (2, 24) du système de freinage (1) sont alimentés en énergie au moyen d'un réseau de bord (9) en fonctionnement normal et tandis qu'en cas de détérioration du fonctionnement du réseau de bord (9), ils sont alimentés en énergie au moins partiellement au moyen d'une alimentation en énergie de secours qui est constituée par un système de pile à combustible (11), **caractérisé en ce que** le système de pile à combustible (11) comprend une pile à combustible (12) qui est hors fonctionnement lorsque le réseau de bord est en fonctionnement et qui entre automatiquement en fonctionnement lorsque l'alimentation par le réseau de bord est détériorée.

2. Système d'alimentation en énergie pour un système de direction (1)
important pour la sécurité, à fonctionnement électrique, dans un véhicule automobile, dans lequel des consommateurs d'énergie électrique (2, 24) du système de direction (1) sont alimentés en énergie au moyen d'un réseau de bord (9) en fonctionnement normal, tandis qu'en cas de détérioration du fonctionnement du réseau de bord (9), ils sont alimentés en énergie au moins partiellement au moyen d'une alimentation en énergie de secours qui est constituée par un système de pile à combustible (11), **caractérisé en ce que** le système de pile à combustible (11) comprend une pile à combustible (12) qui est hors fonctionnement lorsque le réseau de bord est en fonctionnement et qui entre automatiquement en fonctionnement lorsque l'alimentation par le réseau de bord est détériorée.

3. Système d'alimentation en énergie selon la revendication 1 ou 2, **caractérisé en ce que** le système de pile à combustible (11) comprend :
- un réservoir de combustible (13) destiné à accumuler du combustible,
- un réservoir d'oxydant (14) destiné à accumuler un oxydant,
- une pile à combustible (12) destinée à produire de l'énergie sur la base d'une réaction chimique entre le combustible et l'oxydant, et
- une unité de soupapes (15) pouvant être commandée, qui comprend une soupape à combustible (18) destinée à commander l'amenée du combustible et une soupape à oxydant (19) destinée à commander l'amenée de l'oxydant à la pile à combustible (12).

4. Système d'alimentation en énergie selon la revendication 1 ou 2, **caractérisé en ce que** le système de pile à combustible (11) comprend :
- un réservoir de combustible (13) destiné à accumuler du combustible,
- une pile à combustible (12) destinée à produire de l'énergie sur la base d'une réaction chimique entre le combustible et un oxydant, l'oxygène de l'air servant d'oxydant, et
- une unité de soupapes (15) pouvant être commandée, qui comprend une soupape à combustible (18) destinée à commander l'amenée du combustible à la pile à combustible (12).

5. Système d'alimentation en énergie selon la revendication 3 ou 4, **caractérisé en ce que** la pile à combustible (12) présente :
- une cathode (16) qui est reliée à la ligne de masse du système important pour la sécurité (1, 1')
- une anode (17) qui est raccordée au réseau de bord (9) par l'intermédiaire d'un raccordement de réseau de bord (21), et
- un électrolyte (20) qui relie la cathode (16) et l'anode (17) l'une à l'autre par conduction électrique.

6. Système d'alimentation en énergie selon la revendication 5, **caractérisé en ce qu'**entre le réseau de bord (9) et le raccordement de réseau de bord (21), est intercalée une protection contre l'alimentation inverse (22).

7. Système d'alimentation en énergie selon une des revendications 3 à 6,
**caractérisé en ce que** les soupapes (18, 19) de l'unité de soupapes (15) sont ouvertes à l'état sans courant.

8. Système d'alimentation en énergie selon une des revendications 3 à 7,
**caractérisé en ce que** l'unité de soupapes (15) est à fonctionnement piézoélectrique.

9. Système d'alimentation en énergie selon une des revendications 3 à 8,
**caractérisé en ce qu'**il présente un circuit de surveillance (23) par lequel la pile à combustible (12) et/ou les réservoirs (13, 14) sont surveillés continuellement pendant le fonctionnement du système important pour la sécurité.

10. Système d'alimentation en énergie selon la revendication 9, **caractérisé en ce que** le circuit de surveillance (23)
- mesure la conductibilité de l'électrolyte (20) de la pile à combustible (12)
- compare la conductance à un intervalle de valeurs prédéterminé et
- en présence de conductances situées en dehors du domaine de valeurs, il en déduit la présence d'un défaut dans la pile à combustible (12) et déclenche un avertissement de défaut.

11. Système d'alimentation en énergie selon la revendication 9, **caractérisé en ce que** le circuit de surveillance (23) détermine
- le contenu des réservoirs (13, 14) en fonction de
• une mesure de niveau dans le cas de combustibles ou oxydants liquides ou
• une mesure de pression et de température dans le cas de combustibles ou oxydants gazeux
- compare le contenu des réservoirs à une valeur limite prédéterminée et
- déclenche une annonce d'avertissement si on est tombé au-dessous de la valeur limite.
